# EUROPÄISCHE PATENTSCHRIFT

(11) **EP 0 452 702 B1**
(45) Veröffentlichungstag und Bekanntmachung des Hinweises auf die Patenterteilung: **22.02.1995**
(21) Anmeldenummer: 91104562.3
(22) Anmeldetag: 22.03.1991
(51) Int. Cl.: B23Q 1/28

(54) **Feststellvorrichtung für eine Linearbewegungseinheit**
Fixing device for a linear-movement unit
Dispositif de fixation pour une unité de mouvement linéaire

(30) Priorität: 19.04.1990 DE 4012524
(43) Veröffentlichungstag der Anmeldung: 23.10.1991
(73) Patentinhaber: DOMA-TECH PNEUMATISCHE KOMPONENTEN, CH-9434 Au/SG (CH)
(72) Erfinder: Mainardi, Gianfranco, CH-9444 Diepoldsau (CH)
(74) Vertreter: Klunker . Schmitt-Nilson . Hirsch

(56) Entgegenhaltungen:
- WO-A-82/01750
- DD-A- 272 817
- DE-C- 2 948 005
- GB-A- 1 477 455
- US-A- 2 090 550
- US-A- 2 806 723
- US-A- 3 334 931
- US-A- 4 084 792
- US-A- 4 854 444

## Beschreibung

Die Erfindung bezieht sich auf eine Feststellvorrichtung für eine Linearbewegungseinheit, nach dem Oberbegriff des Anspruchs 1.

Im Bereich der Handhabungstechnik, aber auch in anderen Bereichen der Technik werden sogenannte Linearbewegungseinheiten oder Linearführungen eingesetzt, die allgemein aus einer Führungsstangenanordnung und einem darauf verfahrbaren Schlitten bestehen. Der Antrieb des Schlittens erfolgt hydraulisch oder pneumatisch, vorzugsweise mit Hilfe einer Zylinder-Kolben-Anordnung. Der Antrieb kann aber auch mit Hilfe eines Linearmotors erfolgen. Die Führungsstangenanordnung umfaßt im einfachsten Fall eine einzige Führungsstange mit kreisrundem Querschnitt, meistens sind jedoch mindestens zwei Führungsstangen vorgesehen, damit der Schlitten stabiler geführt wird.

Es gibt viele Anwendungsbereiche, bei denen ein exaktes und sicheres Feststellen des Schlittens an einer bestimmten Position erforderlich ist. Beispielsweise wird in einem Industrieroboter an eine Linearbewegungseinheit ein Stellungsbefehl gegeben, aufgrund dessen der Schlitten zu einer bestimmten Position entlang der Führungsstange bewegt wird. Nach Erreichen der Position muß der Schlitten festgestellt werden, damit von außen einwirkende Kräfte die Position des Schlittens nicht verändern können.

Beim Feststellen des Schlittens einer Linearbewegungseinheit ist es besonders wichtig, daß nicht nur eine beträchtliche Kraft gegenüber einer möglichen Lageveränderung des Schlittens erzeugt wird, sondern der Feststellvorgang selbst darf die einmal erreichte Position des Schlittens nicht verändern.

Hierzu zeigt in Übereinstimmung mit dem Oberbegriff des Anspruchs 1 die US-A-28 06 723 eine Feststellvorrichtung, bei der die Klemmglieder als Ringscheiben ausgebildet sind, die gegensinnig so vorgespannt sind, daß sie in einer Schrägstellung auf der Führungsstange festklemmen. Werden sie gegen die Vorspannkraft etwa senkrecht zu der Führungsstange gestellt, sind sie lose verschieblich. Die Ringscheiben vermögen nur ein stark beschränktes Reibungsmoment zu erzeugen.

Der Erfindung liegt die Aufgabe zugrunde, eine Feststellvorrichtung der eingangs genannten Art derart weiterzubilden, daß mit einer platzsparenden Konstruktion ein Feststellen des Schlittens mit großer Reibungskraft möglich ist.

Diese Aufgabe wird erfindungsgemäß gelöst durch die Merkmale des Kennzeichnungsteils des Anspruchs 1.

Durch das Verstellen der Klemmglieder in entgegengesetzte Richtungen wird erreicht, daß sich die Position des Schlittens beim Feststellvorgang nicht ändert. Entweder werden die Klemmglieder voneinander fort oder aufeinander zu bewegt. Auf jeden Fall heben sich etwaige etwa parallel zur Führungsstange gerichtete Kräfte gegeneinander auf. Bei der Bewegung handelt es sich um eine Schwenkbewegung im Uhrzeigersinn bzw. im Gegenuhrzeigersinn. In der zweiten Stellung sitzen die Klemmglieder lose auf der Führungsstange. Da es sich um Präzisionsbauteile handelt, braucht der entsprechende Sitz jedes Klemmgliedes nur geringfügig größer zu sein als die Außenkontur der Führungsstange. Damit genügt eine geringfügige Bewegung der Klemmglieder, um von der ersten Stellung in die zweite Stellung zu gelangen und umgekehrt.

Um mit einfachen Mitteln zu erreichen, daß sich etwaige Kräfte, die eine Verstellung der Position des Schlittens zur Folge haben könnten, aufheben, ist die Ausgestaltung der Klemmglieder symmetrisch.

Durch die erfindungsgemäße Ausgestaltung wird ein beträchtlicher Hebelarm geschaffen, so daß bei gegebener Spreizkraft im Bereich der Steuerflächen eine erhebliche Klemmkraft in den Kopfstücken erzielt wird. Diese Klemmkraft bewirkt keinerlei Beschädigungen oder Verformungen der Führungsstange, da es sich bei der Führungsstange regelmäßig um ein oberflächengehärtetes Bauteil handelt.

Die symmetrische Ausgestaltung der Klemmglieder wird nicht nur deren Herstellung relativ einfach, sondern man erreicht eine absolute Gleichmäßigkeit der Klemmkräfte und erreicht damit in besonders günstiger Weise das Ziel, den Schlitten nach dessen Positionierung beim Feststellvorgang in keiner Weise zu verstellen.

In einer speziellen Ausgestaltung der Erfindung ist vorgesehen, daß das Hülsenglied eine Ringhülse ist, in der diametral als Spreizglied ein an den konischen Steuerflächen anliegender Spreizstift befestigt ist. Eine solche Ausgestaltung der Feststelleinrichtung ist platzsparend und gestattet ein einfaches Verstellen der Klemmglieder, so daß diese ihre erste Stellung bzw. ihre zweite Stellung einnehmen. Die Steuerflächen sind konisch und werden durch Verschiebung des Spreizstifts in Längsrichtung der Schäfte der Klemmglieder voneinander fort oder aufeinander zu bewegt.

Grundsätzlich kann man die erfindungsgemäße Feststelleinrichtung als selbstklemmendes Bauteil oder als selbstlösendes Bauteil ausgestalten. In einer speziellen Ausführungsform der Erfindung ist vorgesehen, daß die konischen Steuerflächen zu den den Kopfstücken abgewandten Enden der Schäfte hin aufeinander zu laufen, so daß die Kraft der Schraubenfeder die Klemmglieder in die erste Stellung vorspannt. Dies entspricht der selbstklemmenden Variante der Feststelleinrichtung. Um die Feststelleinrichtung zu lösen, muß über die Klemmhülse die Schraubenfeder zusammengepreßt werden, so daß der Sperrstift in eine Lage gelangt, in welcher die Klemmglieder mit den Steuerflächen aufeinander zulaufen können und somit die Feststellvorrichtung lösen können.

Ein besonderer Vorteil der erfindungsgemäß ausgebildeten Feststelleinrichtung besteht darin, daß man die Möglichkeit hat, die gesamte Feststelleinrichtung in einem kompakten Gehäuse unterzubringen und die so als Patrone ausgebildete Feststelleinrichtung bequem in dem Schlitten anbringen kann.

Hierzu sieht die Erfindung zunächst vor, daß die als Feststellpatrone ausgebildete Feststelleinrichtung ein zylindrisches Gehäuse aufweist, mit Öffnungen für die das Gehäuse in Querrichtung durchsetzende Führungsstange und eine Anschlußöffnung für eine Betätigungs-Energiequelle.

Als Energiequelle zum Betätigen der Feststelleinrichtung kommen grundsätzlich eine Druckluftquelle, eine Hydraulikenergiequelle oder elektrische Energie in Betracht. Letztere dient für die Betätigung der Feststelleinrichtung mit Hilfe einer elektromechanischen Anordnung. Vorzugsweise erfolgt die Betätigung der Feststelleinrichtung jedoch pneumatisch oder hydraulisch.

Hierzu sieht die Erfindung speziell vor, daß zur Ausbildung als Feststellpatrone in einem zylindrischen Gehäuse die jeweils einen halbkreisförmigen Querschnitt aufweisenden Klemmglieder derart aufgenommen sind, daß ihre Durchgangsöffnungen mit Öffnungen in dem Mantel des zylindrischen Gehäuses fluchten, daß an der Ringhülse stirnseitig ein im Bodenbereich des zylindrischen Gehäuses verschieblich gelagertes Druckglied anliegt, welches mit dem Gehäuse eine Druckkammer bildet, in die eine Anschlußöffnung für eine Fluidleitung mündet.

Aufgrund dieser Ausgestaltung steht eine zylindrische Patrone zur Verfügung, die mit wenigen Handgriffen montiert werden kann. Die in den Schlitten eingebaute Patrone kann an eine Fluidleitung, z.B. an eine Druckluftleitung angeschlossen werden. Nach dem Positionieren des Schlittens in der gewünschten Lage wird die Druckkammer entlastet, so daß das vorzugsweise becherförmig ausgebildete Druckglied die Ringhülse freigibt. Damit wird die Schraubenfeder entlastet, und die beiden Klemmglieder können ihre erste Stellung einnehmen, in der sie reibschlüssig mit der Führungsstange verbunden sind. Wenn der Schlitten zu einer anderen Stelle bewegt werden soll, wird über die Druckluftleitung die Druckkammer unter Druck gesetzt, so daß das Druckglied auf den unteren Rand der Ringhülse einwirkt und somit die Schraubenfeder zusammendrückt. Die Klemmglieder können dann ihre zweite Stellung einnehmen, so daß der Schlitten freigegeben ist.

Im folgenden wird ein Ausführungsbeispiel der Erfindung anhand der Zeichnung näher erläutert. Es zeigen:
- Figur 1: eine perspektivische, schematische Ansicht einer Linearbewegungseinheit mit einer erfindungsgemäßen Feststelleinrichtung,
- Figur 2: eine Längsschnittansicht durch eine als Feststellpatrone ausgebildete Feststelleinrichtung, wobei zur Vereinfachung der Darstellung der die Patrone teilweise umgebenden Schlitten nicht dargestellt ist,
- Figur 3: eine ähnliche Ansicht wie Fig. 2, jedoch ohne das die eigentliche Feststelleinrichtung umgebende Gehäuse, wobei im Gegensatz zu der losen Stellung nach Fig. 2 hier die Feststelleinrichtung reibschlüssig mit einer Führungsstange verbunden ist, und
- Figur 4: eine Ansicht der in Fig. 3 dargestellten Anordnung von unten.

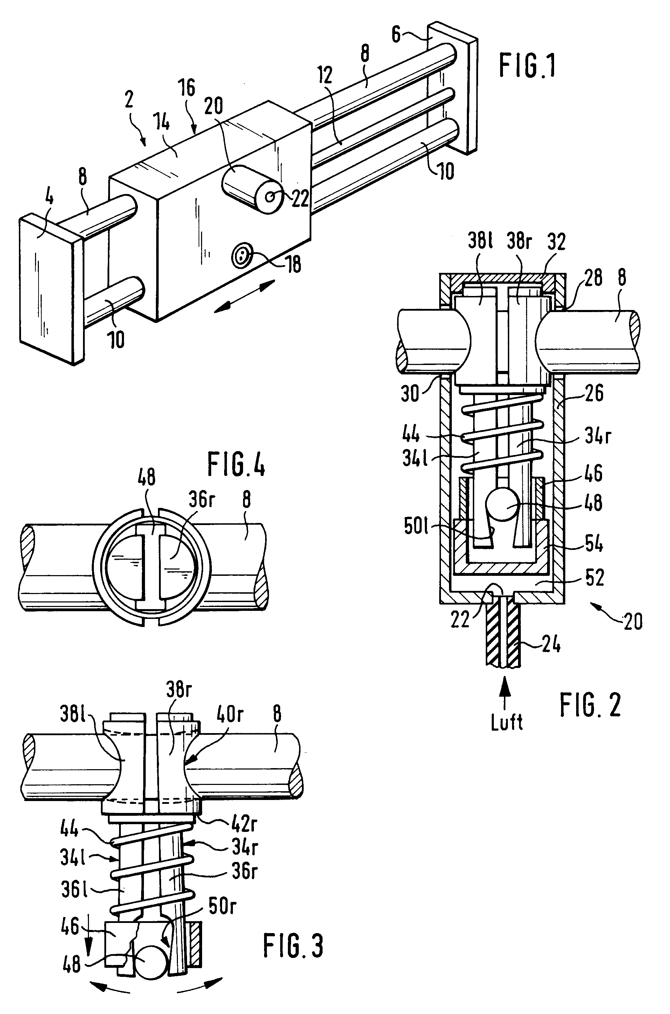

Im folgenden wird eine Feststelleinrichtung gemäß der Erfindung in Verbindung mit einer speziellen Linearbewegungseinheit beschrieben. Solche Linearbewegungseinheiten sind an sich bekannt und sollen hier nur in ihren wesentlichen Elementen erläutert werden:
Nach Fig. 1 enthält eine Linearbewegungseinheit 2 zwei Endstücke 4 und 6, zwischen denen sich zwei zueinander parallele Führungsstangen 8 und 10 mit jeweils kreisförmigem Querschnitt erstrecken. Beide Führungsstangen 8 und 10 sind oberflächengehärtet.

Zwischen dem Endstück 6 und einem Schlittengehäuse 14 eines Schlittens 16 erstreckt sich eine Kolbenstange 12 einer hier nicht näher dargestellten Zylinder-Kolben-Einheit, durch die der Schlitten 16 entlang der Führungsstangen 8 und 10 linear verschoben wird, um in einer bestimmten Position angehalten zu werden. Die Steuerung des Schlittens 16 kann z.B. elektrisch erfolgen, wozu sich an dem Schlitten 16 eine Anschlußbuchse 18 befindet. Um den an einer bestimmten Stelle positionierten Schlitten 16 unverrückbar festzustellen, so daß er sich auch unter Einwirkung äußerer Kräfte nicht bewegt, ist in das Schlittengehäuse 14 eine als Feststellpatrone 20 ausgebildete Feststelleinrichtung integriert. In Fig. 1 ist ein aus dem Schlittengehäuse 14 seitlich herausragender Endabschnitt der Feststellpatrone 20 dargestellt. Im Boden der Feststellpatrone 20 befindet sich eine Anschlußöffnung 22 für eine Fluidleitung.

Fig. 2 zeigt im Längsschnitt den Aufbau der Feststellpatrone 20 in Verbindung mit der Führungsstange 8.

An die im Boden eines aus Aluminium bestehenden, zylindrischen Gehäuses 26 ausgebildete Anschlußöffnung 22 schließt ein Luftschlauch 24 an, durch den bei Bedarf Druckluft in eine in dem Gehäuse 26 ausgebildete Druckkammer eingeleitet werden kann.

Sich diametral gegenüberliegend sind in dem Mantel des Gehäuses 26 zwei Öffnungen 28 und 30 ausgebildet. Die Oberseite des Gehäuses 26 wird von einem aus Aluminium bestehenden Deckel 32 verschlossen.

Im folgenden sei auf die Fig. 2, 3 und 4 bezug genommen. Fig. 3 zeigt die in Fig. 2 dargestellte Feststellpatrone ohne Gehäuse und in festgeklemmter Stellung, während in Fig. 2 eine lose Stellung der Feststellpatrone gezeigt ist.

Die Feststelleinrichtung enthält zwei bezüglich einer senkrecht zur Längsachse der Führungsstange 8 stehenden Ebene symmetrische Klemmglieder 34r, 34l mit jeweils halbkreisförmigem, abgestuftem Querschnitt. Die Klemmglieder bestehen aus Messing. Durch die Zusätze "r" bzw. "l" zu einzelnen Teilen ist deutlich gemacht, daß diese Teile jeweils ein symmetrisches Pendant haben. Damit ist klar, daß der Zusatz "r" bzw. "l" bei einem Bezugszeichen stets auf ein symmetrisches weiteres Teil hinweist.

Die einen gleichen Aufbau aufweisenden Klemmglieder 34r und 34l besitzen jeweils ein Kopfstück 38r bzw. 38l und einen damit einstückig ausgebildeten Schaft 36r bzw. 36l. In dem Kopfstück befindet sich eine Durchgangsbohrung 40r, deren Innendurchmesser geringfügig größer ist als der kreisförmige Außendurchmesser der Führungsstange 8. Auf der Innenseite des Schafts 36r, also dem anderen Schaft 36l zugewandt, ist an dem dem Kopfstück 38 abgewandten Ende eine konische Steuerfläche 50r ausgebildet. Dieses Ende der Schäfte 36r, 36l ist von einer Ringhülse 36 umgeben, in der ein Spreizstift 48 festen Sitz hat. An einer Schulter 42r des Kopfstücks 38r und an einer entsprechenden Schulter des Klemmglieds 34l stützt sich eine Schraubenfeder 44 ab, die die Ringhülse 46 zum freien Ende der Schäfte hin vorspannt. Damit spreizt der Spreizstift 48 über die konisch nach außen zulaufenden Steuerflächen 50r, 50l die Klemmglieder 34r, 34l voneinander fort. Dieses Aufspreizen entspricht einer Schwenkbewegung der beiden Klemmglieder im Gegenuhrzeigersinn (34r) bzw. im Uhrzeigersinn (34l), wobei der Drehpunkt im Bereich der Kopfstücke 38r bzw. 38l liegt. Dadurch klemmen sich die beiden Kopfstücke an der Führungsstange 8 fest. Etwaige Kräfte in Längsrichtung der Führungsstange heben sich dabei gegenseitig auf, so daß sich die Lage der Feststelleinrichtung bezüglich der Führungsstange 8 nicht ändert.

Um die Feststelleinrichtung zu lösen, muß der Spreizstift 48 aus der in Fig. 3 dargestellten Stellung nach oben bewegt werden, so daß er die in Fig. 2 dargestellte Stellung einnimmt.

Dazu wird die Ringhülse, die eine Bewegungseinheit mit dem Spreizstift 48 bildet, auf die Kopfstücke 38r, 38l zu bewegt, indem die Schraubenfeder 44 zusammengepreßt wird. An der unteren Stirnseite der Ringhülse 46 liegt die obere Stirnseite eines becherförmig ausgebildeten Druckglieds 54 an. Die äußere Bodenfläche des Druckgliedes 54 bildet zusammen mit dem unteren Innenbereich des zylindrischen Gehäuses 26 eine Druckkammer 52. Wenn Druckluft in die Druckkammer 52 gelangt, fährt das Druckglied 54 nach oben und drückt die Ringhülse 46 gegen die Federkraft der Feder 44 nach oben, so daß der von der Hülse 46 mitgenommene Spreizstift 48 die in Fig. 2 dargestellte Stellung einnimmt. Die beiden Klemmglieder 34r, 34l sitzen jetzt lose auf der Führungsstange 8, so daß der Schlitten 16 mit der Feststellpatrone bewegt werden kann.

Statt der in Fig. 1 dargestellten einzigen Feststellpatrone 20 können auch zwei Feststellpatronen vorgesehen sein, die auf beide Führungsstangen 8 und 10 einwirken.

Wie man aus den Fig. 2 und 3 ersehen kann, handelt es sich bei der Feststellpatrone 20 um ein selbstsperrendes Element. Das heißt: Wenn keine Druckluft in die Druckkammer 52 gelangt, nimmt die Feststelleinrichtung die Lage nach Fig. 3 ein, so daß sie den Schlitten feststellt.

Bildete man die konischen Steuerflächen 50r und 50l so aus, daß sie in Richtung des äußeren Endes der Klemmglieder auseinanderlaufen (man müßte dann Mittel vorsehen, durch die der Spreizstift zwischen den Klemmgliedern gehalten wird), so würde die Druckkraft der Schraubenfeder 44 die Klemmglieder in einer lose auf der Führungsstelle 8 sitzenden Stellung belasten. Erst bei Druckbeaufschlagung der Druckkammer 52 würde die Schraubenfeder zusammengedrückt werden, und der Spreizstift 48 würde die Klemmglieder spreizen, um den Schlitten festzustellen.

## Patentansprüche

1. Feststellvorrichtung für eine Linearbewegungseinheit, die einen entlang mindestens einer Führungsstange (8, 10) kreisförmigen Querschnitts mittels eines Antriebes verfahrbaren Schlitten (16) aufweist, in dem die Feststellvorrichtung (20) gelagert ist, mit von der Führungsstange (8) durchsetzten Klemmgliedern (34r, 34l), die in entgegengesetzte Richtungen verstellbar sind, um in einer ersten Stellung zum Feststellen des Schlittens (16) reibungsschlüssig mit der Führungsstange (8) in Eingriff zu stehen, und in einer zweiten Stellung lose auf der Führungsstange (8) verschieblich zu sein, wobei die Klemmglieder (34r, 34l) eine Durchgangsöffnung (40r) aufweisen, die die Führungsstange mit Spiel aufzunehmen vermag, und ferner durch zwei zueinander bezüglich einer senkrecht zur Längsachse der Führungsstange (8) orientierten Ebene symmetrische Teile gebildet werden,
**dadurch gekennzeichnet**,
daß die Klemmglieder jeweils aufweisen:
- ein Kopfstück (38r, 38l) mit der Durchgangsöffnung (40r),
- einen an das Kopfstück (38r, 38l) anschließenden Schaft (36r, 36l) und
- eine symmetrisch an jedem Klemmglied (34r, 34l) ausgebildete Steuerfläche (50r, 50l),
daß, zusammenwirkend mit den Steuerflächen (50r, 50l), ein Betätigungsglied (48) für die Klemmglieder (34r, 34l) vorgesehen ist, das von einer Betätigungseinrichtung (44, 46) an den Steuerflächen (50r, 50l) entlang bewegbar ist, um die Klemmglieder (34r, 34l) in die erste oder in die zweite Stellung zu verschwenken, daß, entsprechend dem kreisförmigen Querschnitt der Führungsstange (8), jede als Bohrung ausgebildete Durchgangsöffnung (40r) einen etwas größeren Querschnitt aufweist, und daß die Betätigungseinrichtung ein von einer Energiequelle beaufschlagbares Hülsenglied (46) aufweist, in der ein an der jeweiligen Steuerfläche (50r, 50l) anliegender Nockenfolger (48) als Betätigungsglied befestigt ist, und die von einer die beiden Schäfte (36r, 36l) umgebenden, sich an den Kopfstücken (38r, 38l) abstützenden Schraubenfeder (44) vorgespannt ist.

2. Feststelleinrichtung nach Anspruch 1,
**dadurch gekennzeichnet**,
daß die Steuerflächen (50r, 50l) einander jeweils zugewandt sind.

3. Feststelleinrichtung nach Anspruch 2,
**dadurch gekennzeichnet**,
daß sich zwischen den einander zugewandten Steuerflächen (50r, 50l) ein den Nockenfolger bildendes und von der Betätigungseinrichtung (44, 46) an den Steuerflächen entlang bewegbares Spreizglied (48) befindet.

4. Feststelleinrichtung nach Anspruch 3,
dadurch gekennzeichnet,
daß die konischen Steuerflächen zu den den Kopfstücken abgewandten Enden der Schäfte (36r, 36l) hin aufeinander zulaufen, so daß die Kraft der Schraubenfeder (44) die Klemmglieder (34r, 34l) in die erste Stellung vorspannt.

5. Feststelleinrichtung nach einem der Ansprüche 1 bis 4,
dadurch gekennzeichnet,
daß die als Feststellpatrone (20) ausgebildete Feststelleinrichtung aufweist: ein zylindrisches Gehäuse (26) mit Öffnungen (28, 30) für die das Gehäuse (26) in Querrichtung durchsetzende Führungsstange (8) und eine Anschlußöffnung (22) für eine Betätigungsenergiequelle.

6. Feststelleinrichtung nach einem der Ansprüche 3, 4 und 5,
dadurch gekennzeichnet,
daß zur Ausbildung als Feststellpatrone in einem zylindrischen Gehäuse (26) die jeweils einen halbkreisförmigen Querschnitt aufweisenden Klemmglieder (34r, 34l) derart aufgenommen sind, daß ihre Durchgangsöffnungen (40r) mit Öffnungen (28, 30) in dem Mantel des zylindrischen Gehäuses (26) fluchten, daß an der Ringhülse (46) stirnseitig ein im Bodenbereich des zylindrischen Gehäuses (26) verschieblich gelagertes Druckglied (54) anliegt, welches mit dem Gehäuse (26) eine Druckkammer (52) bildet, in die eine Anschlußöffnung (22) für eine Fluidleitung (24) mündet.

## Claims

1. Locking device for a linear-movement device, comprising a bogie (16), which is movable along at least one guide rod (8, 10) of circular cross-section by means of a drive and wherein is mounted the locking device (20), with clamping elements (34r, 34l), which are passed through by the guide rod (8) and which are adjustable in opposite directions, so that they are in a first position for locking the bogie (16) frictionally engaged with the guide rod (8) and in a second position loosely displaceable on the guide rod (8), and that the clamping elements (34r, 34l) have a passage (40r) which accommodates the guide rod with a play, and furthermore with two parts which are symmetrical to each other relative to a plane which is oriented vertically to the longitudinal axis of the guide rod (8)
**characterised in that**
each clamping element comprises:
- a head piece (38r, 38l) with the passage (40r),
- a shaft (36r, 36l) which adjoins the head piece (38r, 38l), and
- a control surface (50r, 50l) which is symmetrical relative to each clamping element (34r, 34l),
that, in co-operation with the control surfaces (50r, 50l), an operating element (48) for the clamping elements (34r, 34l) is provided, which is moved by an operating device (44, 46) along the control surfaces (50r, 50l) for the purpose of pivoting the clamping elements (34r, 34l) into the first or the second position, that, to correspond with the circular cross-section of the guide rod (8), each passage bore (40r) has a slightly larger cross-section, and that the operating device comprises a sleeve element (46), which is loaded by an energy source and wherein is mounted a cam-follower (48), which abuts a respective control surface (50r, 50l) and serves as an operating element, and that the coiled spring (44), which is surrounded by one of the two shafts (36r, 26l) and supported against the head pieces (38r, 38l), is pretensioned.

2. Locking device according to claim 1,
**characterised in that**
the control surfaces (50r, 50l) are facing each other.

3. Locking device according to claim 2,
**characterised in that**
a spreading element (48) is provided, which forms the cam-follower and is movable by way of the operating device (44, 46) along the control surfaces.

4. Locking device according to claim 3,
**characterised in that**
the conical control surfaces extend towards each other in the direction of the ends of the shafts (36r, 36l) which are facing away from the head pieces, so that the load of the coiled spring (44) pretensions the clamping elements (34r, 34l) in the first position.

5. Locking device according to one of claims 1 to 4,
**characterised in that**
the locking device, which is arranged as a locking cartridge (20), comprises a cylindrical housing (26) with openings (28, 30) for the guide rod (8), which transversely passes through the housing (26), and a socket opening (22) for an operating-energy source.

6. Locking device according to one of claims 3, 4 and 5,
**characterised in that**,
for a design as a locking cartridge in a cylindrical housing (26), clamping elements (34r, 34l) of respective semi-circular cross-section are accommodated in such a manner that their passages (40r) are flush with openings (28, 30) in the casing of the cylindrical housing (26), that the end of the annular sleeve (46) is abutted by a pressure element (54), which is displaceably mounted in the bottom area of the housing (26) and which together with the housing (26) forms a pressure chamber (52) into which terminates a socket opening (22) for a fluid pipe (24)

## Revendications

1. Dispositif de fixation pour une unité de mouvement linéaire, présentant un chariot (16), déplacable au moyen d'un entraînement le long d'au moins une barre de guidage (8; 10) à section transversale circulaire et dans lequel le dispositif de fixation (20) est monté, avec des organes de serrage (34r, 34l), traversés par la barre de guidage (8) et pouvant être réglés dans des directions opposées, pour effectuer une mise en contact, dans une première position, pour assurer la fixation du chariot (16) par friction à la barre de guidage (8) et, dans une deuxième position, être déplaçable librement sur la barre de guidage (8), les organes de serrage (34r, 34l) présentant une ouverture de passage (40r) permettant de recevoir avec du jeu la barre de guidage et en outre permettant de recevoir avec du jeu la barre de guidage et en outre étant constituée par des deux parties mutuellement symétrique par rapport à un plan orienté perpendiculairement à l'axe longitudinal de la barre de guidage (8),
caractérisé en ce que
les organes de serrage présentent chacun :
- une pièce de tête (38r, 38l) avec l'ouverture de passage (40r),
- une tige (36r, 36l) raccordée à la pièce de tête (38r, 38l) et
- une surface de commande (50r, 50l) réalisée symétriquement sur chaque organe de serrage (34r, 34l),
en ce qu'est prévu, coopérant avec les surfaces de commande (50r, 50l), un organe d'actionnement (48) destiné aux organes de serrage (34r, 34l), déplacable le long des surfaces de commande (50r, 50l) par un dispositif d'actionnement (44, 46), afin de faire pivoter les organes de serrage (34r, 34l) dans la première ou la deuxième position, en ce que, de manière correspondante à la section transversale circulaire de la barre de guidage (8), chaque ouverture de passage (40r), réalisée sous forme de perçage présente, une section transversale un peu plus grande, et en ce que le dispositif d'actionnement présente un organe formant douille (46) pouvant être sollicité par une source d'énergie et dans lequel un suiveur de came (48), appuyant sur la surface de commande (50r, 50l) respective, est fixé à titre d'organe d'actionnement, et le dispositif d'actionnement est précontraint par un ressort hélicoïdal (44), entourant les deux tiges (36r, 36l) et prenant appui sur les pièces de tête (38r, 38l).

2. Dispositif de fixation selon la revendication 1, caractérisé en ce que les surfaces de commande (50r, 50r) sont tournées l'une vers l'autre.

3. Dispositif de fixation selon la revendication 2, caractérisé en ce qu'entre les surfaces de commande (50r, 50l) tournées l'une vers l'autre se trouve un organe d'écartement (48) constituant le suiveur de came et déplaçable le long des surfaces de commande, par le dispositif d'actionnement (44, 46).

4. Dispositif de fixation selon la revendication 3, caractérisé en ce que les surfaces de commande conique s'étendent en se rapprochant l'une de l'autre en direction des extrémités, opposées aux pièces de tête, des tiges (36r, 36l), de sorte que la force du ressort hélicoïdal (44) précontraint les organes de serrage (34r, 34l) dans la première position.

5. Dispositif de fixation selon l'une des revendications 1 à 4, caractérisé en ce que le dispositif de fixation, réalisé sous forme de cartouche de fixation (20) présente : un carter cylindrique (26) avec des ouvertures (28, 30) pour la barre de guidage (8) traversant le carter (26) en direction transversale et une ouverture de raccordement (22) destinée à la source d'énergie d'actionnement.

6. Dispositif de fixation selon l'une des revendications 3, 4, et 5, caractérisé en ce que, dans le cas de la réalisation sous forme de cartouche de fixation dans un carter cylindrique (26), les organes de serrage (34r, 34l) présentant chacun une section transversale en forme de demi-cercle sont logés de façon que leurs ouvertures de passage (40r) soient alignées avec des ouvertures (28, 30) ménagées dans l'enveloppe du carter cylindrique (26), en ce que, sur la douille annulaire (46), appuie frontalement un organe de pressage (50), monté mobile dans la zone de fond du carter cylindrique (26) et constituant, avec le carter (26), une chambre de pression (52), dans laquelle débouche une ouverture de raccordement (22) destinée à une conduite de fluide (24).
